Europäisches Patentamt

European Patent Office

Office européen des brevets

(19)

(11) Numéro de publication: **0 072 733**
**B1**

(12) **FASCICULE DE BREVET EUROPEEN**

(45) Date de publication du fascicule du brevet:
06.03.85

(51) Int. Cl.⁴: **F 16 J 15/34**, F 16 J 15/40

(21) Numéro de dépôt: 82401467.4

(22) Date de dépôt: 04.08.82

(54) **Dispositif hydrostatique de séparation de deux chambres emplies de fluide sous des pressions différentes.**

(30) Priorité: **06.08.81 FR 8115258**

(43) Date de publication de la demande:
**23.02.83 Bulletin 83/8**

(45) Mention de la délivrance du brevet:
**06.03.85 Bulletin 85/10**

(84) Etats contractants désignés:
**BE DE FR GB IT**

(56) Documents cités:
**EP - A - 1 422 767**
**DE - A - 1 650 056**
**DE - A - 2 248 572**
**FR - A - 2 000 565**
**FR - A - 2 070 257**

(73) Titulaire: **JEUMONT-SCHNEIDER Société anonyme dite:, 31-32, Quai de Dion Bouton, F-92811 Puteaux Cedex (FR)**

(72) Inventeur: **Timmermans, Francis, 6, rue Thomas Les Marzelles, F-59460 Jeumont (FR)**
Inventeur: **Vandervorst, Jean, 21, Résidence Le Hainaut, F-59680 Ferriere La Grande (FR)**

(74) Mandataire: **Lejet, Christian, Société JEUMONT-SCHNEIDER 31-32, Quai de Dion Bouton, F-92811 Puteaux Cedex (FR)**

BUNDESDRUCKEREI BERLIN

## Description

La présente invention concerne un dispositif hydrostatique à symétrie axiale de séparation d'une première chambre annulaire amplie d'un fluide sous une haute pression et d'une seconde chambre annulaire coaxiale emplie du même fluide mais sous une basse pression, un mouvement relatif étant imprimé aux parois des deux chambres.

Un tel dispositif trouve son application notamment dans les pompes à fluide à arbre vertical, en particulier dans les pompes à eau pressurisée.

Les dispositifs hydrostatiques de joint à fuite contrôlée sont bien connus. Par exemple, les brevets français 1 422 767, 1 435 568 ou 1 459 107 en décrivent quelques exemples de réalisation. De manière générale, ils incluent un support métallique solidaire de l'arbre et présentant sur sa partie supérieure une paroi sur laquelle repose la partie inférieure d'un corps flottant libre de se déplacer axialement, cette dernière présentant une surface de forme telle que la circulation minimale d'un fluide entre le corps flottant et le support métallique engendre une force tendant à soulever légèrement le corps flottant, de manière à éviter toute usure des pièces en regard, tout en maintenant une barrière de pression entre les chambres emplies de fluide.

Toutefois, ces dispositifs présentent essentiellement deux inconvénients. En effet, d'une part, toute chute de pression du fluide dans la chambre haute pression est génératrice de l'usure des pièces en regard constituant la barrière de pression.

D'autre part, le canal du fluide de fuite déterminé par l'espace entre les pièces en regard constituant la barrière de pression présente une tendance à l'encrassement du fait de particules charriées par le fluide.

La présente invention a pour but d'obvier à ces inconvénients sans modification profonde de l'architecture générale d'un tel dispositif hydrostatique. Selon l'invention, des orifices d'admission sont pratiqués dans la partie inférieure du corps flottant et sont connectés, par l'intermédiaire de conduits d'admission, à une source de fluide ayant une pression normalement supérieure à celle du fluide sous haute pression de la première chambre.

De préférence, la paroi du support métallique sur la partie supérieure duquel repose le corps flottant, est constituée de deux anneaux concentriques situés dans des plans parallèles différents et reliés entre eux par une zone de forme tronconique sensiblement en regard des orifices d'admission pratiqués dans la partie inférieure du corps flottant. La forme de cette paroi permet d'ajuster la répartition du débit du fluide arrivant par les orifices entre les deux chambres.

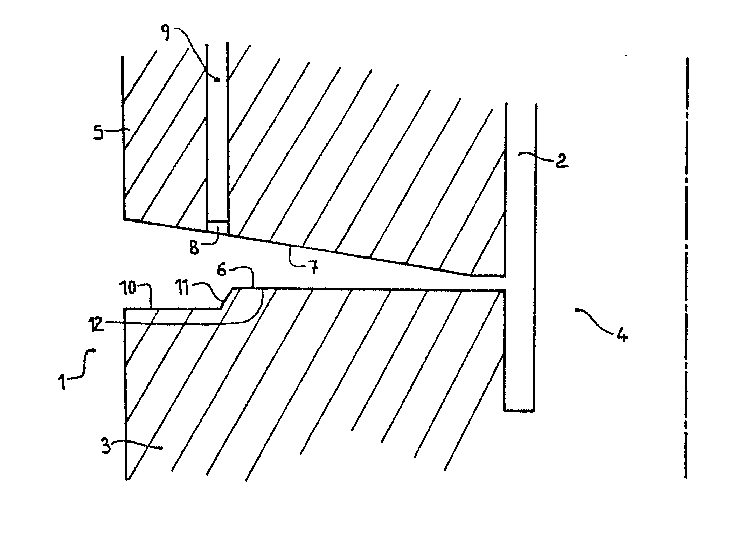

L'invention sera mieux comprise et d'autres buts, avantages et caractéristiques de celle-ci apparaîtront plus clairement à la lecture de la description qui suit à laquelle une planche de dessins est annexée. La figure unique représente schématiquement et en coupe axiale un dispositif hydrostatique conforme à la présente invention.

En référence maintenant à cette figure, le dispositif représenté a pour rôle de constituer la barrière de pression entre une première chambre 1 et une seconde chambre 2. Dans son application à une pompe à arbre vertical, la pression du fluide emplissant la première chambre est normalement de l'ordre de $155 \times 10^5$ Pascals tandis que celle du fluide emplissant la seconde chambre est de l'ordre de $10^5$ Pascals.

Le dispositif est constitué par un support métallique 3 solidaire de l'arbre 4 et par un corps flottant 5 libre de se déplacer axialement. Les parois 6 et 7 de la partie supérieure du support métallique 3 et de la partie inférieure du corps flottant 5 déterminent un canal par lequel fuit normalement le fluide en provenance de la première chambre 1. La forme de la paroi 7 est telle que cette fuite de fluide tend à soulever légèrement le corps flottant 5 qui, de ce fait, ne frotte pas contre la support 3 lorsque l'arbre tourne et que la chambre 1 est sous pression. A titre indicatif, dans une pompe à eau pressurisée, la hauteur du canal varie de 60 microns environ en amont à 10 microns environ en aval. De ce fait il résulte d'un démarrage intempestif de l'arbre alors que la pression dans la première chambre est encore faible, ou bien d'une dépressurisation brutale de la première chambre, une grave détérioration du dispositif. Selon l'invention, ce canal reste alimenté quelles que soient les conditions de pression dans la chambre 1 grâce à une pluralité d'orifices 8 débouchant sur la paroi 7 de la partie inférieure du corps flottant 5 et grâce auxquels on peut amener un fluide se substituant à celui emplissant la première chambre.

Ces orifices 8 sont connectés à des conduits d'admission 9 à l'autre extrémité desquels est branchée une source de fluide sous une pression normalement supérieure à celle qui règne dans la première chambre 1. De ce fait, la fuite est alimentée normalement au moyen de ces orifices 8 et une détérioration du dispositif ne pourrait résulter que de deux défaillances simultanées du système, ce qui augmente sensiblement la fiabilité de tels dispositifs hydrostatiques. En outre, le fluide amené dans le canal par ces orifices 8 peut être préalablement filtré de manière à éviter tout encrassement de la partie de faible section du canal.

De préférence, la paroi 6 du support métallique 3 est constituée de deux anneaux concentriques 10, 12 situés dans des plans différents sensiblement perpendiculaires à l'axe de l'arbre 4; ces deux anneaux sont reliés entre eux par une zone de forme tronconique 11 sensiblement en regard des orifices 8 d'admission du fluide pratiquées dans la partie inférieure 7 du corps flottant 5.

La forme de cette paroi permet d'ajuster la répartition du débit du fluide sortant par les orifices 8. Selon un mode de réalisation, la hauteur de la zone de forme tronconique est de l'ordre de quelques centièmes de millimètres, le fluide arrivant par les orifices 8 circulant alors à 70% vers la première chambre 1 et à 30% vers la seconde chambre 2.

Pour une pompe à eau pressurisée telle qu'indiquée précédemment, il faut prévoir un débit d'eau filtrée amenée par les orifices 8 de l'ordre de 2 m³ par heure.

Les anneaux concentriques 10, 12 constituant la paroi 6 du support métallique 3 peuvent ne pas être parallèles entre eux et présenter une forme légèrement tronconique.

## Revendications

1. Dispositif hydrostatique à symétrie axiale de séparation d'une première chambre (1) annulaire emplie d'un fluide sous une haute pression et d'une seconde chambre (2) annulaire coaxiale emplie du même fluide mais sous une basse pression, un mouvement relatif de rotation autour d'un arbre (4) vertical étant imprimé aux parois des deux chambres, ledit dispositif incluant un support métallique (3) solidaire dudit arbre (4) en rotation présentant sur sa partie supérieure une paroi (6) sur laquelle repose la paroi (7) de la partie inférieure d'un corps flottant (5) libre de se déplacer axialement, lesdites parois en regard, entre lesquelles peut être prévu un joint annulaire, ayant des surfaces de formes telles que de la circulation minimale dudit fluide entre elles résulte une force tendant à soulever légèrement ledit corps flottant de manière à éviter toute usure des pièces en regard tout en maintenant une barrière de pression entre lesdites chambres, caractérisé en ce que des orifices d'admission (8) sont pratiqués dans la paroi de la partie inférieure (7) dudit corps flottant (5) et sont connectés, par l'intermédiaire de conduits d'admission (9), à une source dudit fluide sous une pression normalement supérieure à celle régnant dans ladite première chambre (1).

2. Dispositif selon la revendication 1 caractérisé en ce que le paroi (6) de la partie supérieure dudit support métallique (1) est constituée de deux anneaux concentriques (10, 12) situés dans des plans différents sensiblement perpendiculaires à l'axe dudit arbre (4) lesdits anneaux (10, 12) étant reliés entre eux par une zone (11) de forme tronconique.

3. Dispositif selon la revendication 2 caractérisé en ce que ladite zone (11) de forme tronconique est sensiblement en regard desdites orifices d'admission (8) pratiqués dans ledit corps flottant (5).

## Patentansprüche

1. Hydrostatische axialsymmetrische Vorrichtung zur Trennung einer ersten ringförmigen Kammer (1), die mit einem unter hohem Druck stehenden fluiden Medium angefüllt ist, von einer zweiten, koaxialen ringförmigen Kammer (2), die mit demselben fluiden Medium angefüllt ist, das jedoch unter einem niedrigen Druck steht, wobei eine Relativdrehbewegung um eine senkrechte Welle (4) den Wänden der beiden Kammern aufgeprägt wird, die genannte Vorrichtung einen Träger (3) aus Metall enthält, der drehfest mit der Welle (4) verbunden ist und an seinem oberen Teil eine Wand (6) aufweist, auf der die Wand (7) des unteren Teils eines schwimmenden Körpers (5) ruht, der in Axialrichtung frei beweglich ist, und wobei die einander zugewandten Wände, zwischen denen eine Ringdichtung vorgesehen sein kann, derart geformte Oberflächen aufweisen, daß die minimale Zirkulation des genannten fluiden Mediums zwischen ihnen eine Kraft erzeugt, welche bestrebt ist, den genannten schwimmenden Körper leicht auszuheben, so daß jeglicher Verschleiß der einander zugewandten Teile verhindert wird, während eine Druckbarriere zwischen den genannten Kammern aufrechterhalten wird, dadurch gekennzeichnet, daß Einlaßöffnungen (8) in der Wand des unteren Teiles (7) des schwimmenden Körpers (5) angebracht und über Zuleitungen (9) mit einer Quelle für das genannte fluide Medium verbunden sind, welches unter einem Druck steht, der normalerweise den in der ersten Kammer (1) herrschenden Druck übersteigt.

2. Vorrichtung nach Anspruch 1, dadurch gekennzeichnet, daß die Wand (6) des oberen Teiles des Trägers (1) aus Metall aus zwei konzentrischen Ringen (10, 12) gebildet ist, welche in verschiedenen Ebenen liegen, die im wesentlichen senkrecht zu der Achse der Welle (4) sind, wobei diese Ringe (10, 12) miteinander durch eine kegelstumpfförmige Zone (11) verbunden sind.

3. Vorrichtung nach Anspruch 2, dadurch gekennzeichnet, daß die genannte kegelstumpfförmige Zone (11) im wesentlichen den genannten Einlaßöffnungen (8) gegenüberliegt, die in dem schwimmenden Körper (5) angebracht sind.

## Claims

1. Axially symmetrical hydrostatic device for separating a first annular chamber (1) filled with a fluid under a high pressure and a coaxial second annular chamber (2) filled with the same fluid but under a low pressure, a relative rotational movement about a vertical shaft (4) being imparted to the walls of the two chambers, which device includes a metal support (3) integral with the said rotatable shaft (4) and having at its upper portion a wall (6) on which reste the wall (7) of the lower portion of a floating element (5) free to be displaced axially, and the said mutually facing walls, between which an annular sealing element may be provided have surfaces so shaped that the minimum flow of the said fluid between them results in a force tending to lift the said floating element slightly, in such a manner as to obviate any wear on the mutually facing parts whilst maintaining a pressure barrier between the said chambers, characterised in that admission orifices (8) are formed in the wall of the lower portion (7) of the said floating element (5) and communicate via admission conduits (9) with a source of the said fluid under a pressure normally higher than that prevailing in the aid first chamber (1).

2. Device according to claim 1, characterised in that the wall (6) of the upper portion of the said metal support (1) is constituted by two concentric rings (10, 12) situated in different planes substantially perpendicular to the axis of the said shaft (4), the said rings (10, 12) being connected to one another by a zone (11) of frustoconical form.

3. Device according to claim 2, characterised in that the said frustoconically shaped zone (11) is substantially opposite the said admission orifices (8) which are formed in the said floating element (5).